# EUROPEAN PATENT APPLICATION

(11) **EP 4 040 185 A1**
(43) Date of publication of application: **10.08.2022**
(21) Application number: 19947657.3
(22) Date of filing: 01.10.2019
(51) Int. Cl.: G01S 7/481

(54) **LASER SENSOR, MIRROR CONTROL METHOD, AND PROGRAM**

(71) Applicant: FUJITSU LIMITED, Kawasaki-shi, Kanagawa 211-8588 (JP)
(72) Inventor: EJIRI, Arata, Kawasaki-shi, Kanagawa 211-8588 (JP); YANAI, Kosuke, fukuoka-shi Fukuoka 814-8588 (JP); FUJIYOSHI, Shinichi, fukuoka-shi Fukuoka 814-8588 (JP); IIDA, Koichi, Kawasaki-shi, Kanagawa 211-8588 (JP)
(74) Representative: Hoffmann Eitle
(86) International application number: PCT/JP2019/038759
(87) International publication number: WO 2021/064863

(57) **Abstract**

A laser sensor that two-dimensionally scans a measurement target by reflecting a laser beam with a scanning mirror that rotates in a first direction and a second direction orthogonal to each other to scan a scanning angle range includes an angle-of-view change detection unit that outputs, when an angle-of-view change is detected on the basis of a shift amount in an angle-of-view parameter that includes the scanning angle range and the shift amount of the scanning angle range in the second direction set on the basis of a distance and an azimuth angle to the measurement target, a signal that indicates a first frame immediately after the change and a shift change amount, and a correction amount generation unit that generates a shift correction amount and a scanning angle range correction amount that correspond to an expected deviation amount in the first frame using at least the shift change amount. The laser sensor further includes an angle-of-view parameter correction unit that outputs, in response to the signal, a corrected angle-of-view parameter that includes a corrected shift amount obtained by correcting the shift amount with the shift correction amount and a corrected scanning angle range obtained by correcting the scanning angle range with the scanning angle range correction amount in the first frame and outputs the angle-of-view parameter that includes the shift amount and the scanning angle range in a second and subsequent frames, and a drive unit that generates a first drive signal that has a non-linear waveform and rotationally drives the scanning mirror in the first direction to drive the scanning mirror and generates, on the basis of output of the angle-of-view parameter correction unit, a second drive signal that has a linear waveform and rotationally drives the scanning mirror in the second direction to drive the scanning mirror through a low-pass filter.

## Description

### FIELD

The present invention relates to a laser sensor, a mirror control method, and a program.

### BACKGROUND

A laser sensor is capable of measuring a distance to a measurement target and the like by reflecting a laser beam with a mirror that rotates in the horizontal direction or the vertical direction, for example, and two-dimensionally scanning the measurement target. In a case where an angle of view of the laser sensor is fixed, a measurement range is widened while a resolution is lowered when the distance to the measurement target becomes longer, and the measurement range is narrowed while the resolution is improved when the distance to the measurement target becomes shorter. In view of the above, in order to expand the measurement range while maintaining the resolution, there has been proposed a method of changing a measurement range by dynamically changing an angle of view according to movement of a measurement target (e.g., see Patent Document 1).

Note that it has been proposed to correct a drive signal of a mirror using feedback (e.g., see Patent Document 2 and Patent Document 3). However, according to the correction using feedback, it is not possible to correct the first frame immediately after the measurement range has moved in the vertical direction.

### CITATION LIST

### PATENT DOCUMENT

Patent Document 1: Japanese Laid-open Patent Publication No. 2017-181209
Patent Document 2: Japanese Laid-open Patent Publication No. 2011-180294
Patent Document 3: Japanese Laid-open Patent Publication No. 2013-205770

### SUMMARY OF INVENTION

### [TECHNICAL PROBLEM]

For example, a sine wave, which is an example of a non-linear waveform, is used for the drive signal of the mirror in the horizontal direction, and a sawtooth wave, which is an example of a linear waveform, is used for the drive signal of the mirror in the vertical direction. In this case, the sawtooth wave used for the drive signal of the mirror in the vertical direction drives the mirror through a Low-Pass Filter (LPF) to suppress generation of vibration due to resonance point excitation at acute-angled portions (peak and trough portions) of upper and lower ends of the sawtooth wave. Accordingly, although the generation of vibration due to the resonance point excitation is suppressed, a high-frequency component is removed due to characteristics of the LPF, whereby the acute-angled portions at the upper and lower ends of the sawtooth wave become a rounded waveform.

A degree of rounding of the acute-angled portions at the upper and lower ends of the sawtooth wave depends on an inclination a straight line portion immediately before the acute-angled portions at the upper and lower ends. Accordingly, in a case where the angle of view of the laser sensor is fixed, the degree of rounding of the acute-angled portions at the upper and lower ends of the sawtooth wave is constant. Therefore, it becomes possible to suppress a decrease in measurement accuracy of the laser sensor in the vertical direction with respect to the measurement target by, for example, driving the mirror with drive signals excluding the portions where the degree of rounding of the acute-angled portions at the upper and lower ends of the sawtooth wave is constant.

On the other hand, in a case where the angle of view of the laser sensor is dynamically changed and the measurement range moves upward or downward, the degree of rounding of the acute-angled portions at the upper and lower ends of the first frame immediately after the movement changes. In a case where the measurement range moves downward, for example, since the drive signal is based on the lower end of the sawtooth wave, the inclination of the straight line portion immediately before the acute-angled portion at the upper end of the first frame immediately after the movement is relatively gentle and high-frequency components of the drive signal are relatively low, and thus the rounding of the acute-angled portion at the upper end is relatively small. On the other hand, in a case where the measurement range moves upward, for example, the inclination of the straight line portion immediately before the acute-angled portion at the upper end of the first frame immediately after the movement is steep and the high-frequency components of the drive signal are large, and thus the rounding of the acute-angled portion at the upper end is larger. This is because the drive signal is based on the lower end of the sawtooth wave so that the straight line portion immediately before the acute-angled portion at the upper end of the first frame immediately after the movement becomes longer in a case where the measurement range moves upward.

Note that, since the drive signal is based on the lower end of the sawtooth wave, in a case where the measurement range moves upward or downward, the inclination of the straight line portion immediately before the acute-angled portion at the lower end of the first frame immediately after the movement is gentle, and the rounding of the acute-angled portion at the lower end is negligibly small as the high-frequency components of the drive signal are low.

When the degree of rounding of the acute-angled portion at the upper end of the first frame immediately after the measurement range has moved in the vertical direction changes, the measurement range in the vertical direction changes, and the angle of view in the first frame is made different from the angle of view in the second and subsequent frames, accordingly. When the angle of view differs between the first frame immediately after the measurement range has moved in the vertical direction and the second and subsequent frames, the size and the position of the measurement target in the vertical direction change between the first frame and the second frame, whereby the measurement accuracy of the laser sensor for particularly the measurement target having a high moving speed is lowered.

As described above, according to the laser sensor that dynamically changes the angle of view according to movement of the measurement target to change the measurement range, the generation of vibration due to the resonance point excitation is suppressed at the acute-angled portions (peak and trough portions) of the upper and lower ends of the drive waveform by driving the mirror with the linear drive waveform through the LPF. However, when the generation of vibration due to the resonance point excitation is suppressed in such a manner, a high-frequency component is removed due to characteristics of the LPF, whereby the acute-angled portions at the upper and lower ends of the drive waveform become a rounded waveform. Accordingly, when the degree of rounding of the acute-angled portion at the end in a predetermined direction of the first frame immediately after the measurement range has moved in the predetermined direction changes, the angle of view in the first frame is made different from the angle of view in the second and subsequent frames. When the angle of view differs between the first frame immediately after the measurement range has moved and the second and subsequent frames, the size and the position of the measurement target in the predetermined direction change between the first frame and the second frame, whereby the measurement accuracy of the laser sensor for particularly the measurement target having a high moving speed is lowered.

In view of the above, in one aspect, it aims to provide a laser sensor, a mirror control method, and a program capable of controlling an angle of view equally between the first frame immediately after a measurement range has moved in a predetermined direction and the second and subsequent frames.

### [SOLUTION TO PROBLEM]

According to one proposal, there is provided a laser sensor that two-dimensionally scans a measurement target by reflecting a laser beam with a scanning mirror that rotates in a first direction and a second direction orthogonal to each other to scan a scanning angle range, the laser sensor including: an angle-of-view change detection means that outputs, when an angle-of-view change is detected on the basis of a shift amount in an angle-of-view parameter that includes the scanning angle range and the shift amount of the scanning angle range in the second direction set on the basis of a distance and an azimuth angle to the measurement target, a signal that indicates a first frame immediately after the change and a shift change amount; a correction amount generation means that generates a shift correction amount and a scanning angle range correction amount that correspond to an expected deviation amount in the first frame using at least the shift change amount; an angle-of-view parameter correction means that outputs, in response to the signal, a corrected angle-of-view parameter that includes a corrected shift amount obtained by correcting the shift amount with the shift correction amount and a corrected scanning angle range obtained by correcting the scanning angle range with the scanning angle range correction amount in the first frame, and outputs the angle-of-view parameter that includes the shift amount and the scanning angle range in a second and subsequent frames; and a drive means that generates a first drive signal that has a non-linear waveform and rotationally drives the scanning mirror in the first direction to drive the scanning mirror, and generates, on the basis of output of the angle-of-view parameter correction means, a second drive signal that has a linear waveform and rotationally drives the scanning mirror in the second direction to drive the scanning mirror through a low-pass filter.

### [ADVANTAGEOUS EFFECTS OF INVENTION]

According to one aspect, it becomes possible to control the angle of view equally between the first frame immediately after the measurement range has moved in a predetermined direction and the second and subsequent frames.

### BRIEF DESCRIPTION OF DRAWINGS

FIG. 1 is a diagram for explaining an example of a laser sensor according to an embodiment.
FIG. 2 is a functional block diagram illustrating an example of an arithmetic circuit illustrated in FIG. 1.
FIG. 3 is a block diagram illustrating an example of a computer.
FIG. 4 is a diagram illustrating an example of a housing of a sensor body.
FIG. 5 is a flowchart for explaining an example of a distance measurement process.
FIG. 6 is a functional block diagram illustrating an example of an angle-of-view parameter correction circuit according to a first embodiment.
FIG. 7 is a flowchart for explaining an exemplary process of the angle-of-view parameter correction circuit according to the first embodiment.
FIG. 8 is a diagram illustrating an example of a reference table.
FIG. 9 is a diagram for explaining an example of a measurement range in the vertical direction.
FIG. 10 is a diagram for explaining processing when the measurement range is moved downward.
FIG. 11 is a diagram for explaining processing when the measurement range is moved upward.
FIG. 12 is a functional block diagram illustrating an example of an angle-of-view parameter correction circuit according to a second embodiment.
FIG. 13 is a flowchart for explaining an exemplary process of the angle-of-view parameter correction circuit according to the second embodiment.
FIG. 14 is a diagram for explaining exemplary movement of the measurement range in the vertical direction in a case where an angle-of-view parameter is not corrected.
FIG. 15 is a diagram for explaining a time of downward movement of the measurement range in a case where the angle-of-view parameter is not corrected.
FIG. 16 is a diagram for explaining exemplary movement of the measurement range in the vertical direction in a case where the angle-of-view parameter is corrected.
FIG. 17 is a diagram for explaining a time of downward movement of the measurement range in a case where the angle-of-view parameter is corrected.

### DESCRIPTION OF EMBODIMENTS

Hereinafter, each embodiment of a disclosed laser sensor, mirror control method, and program will be described with reference to the drawings.

### [Embodiments]

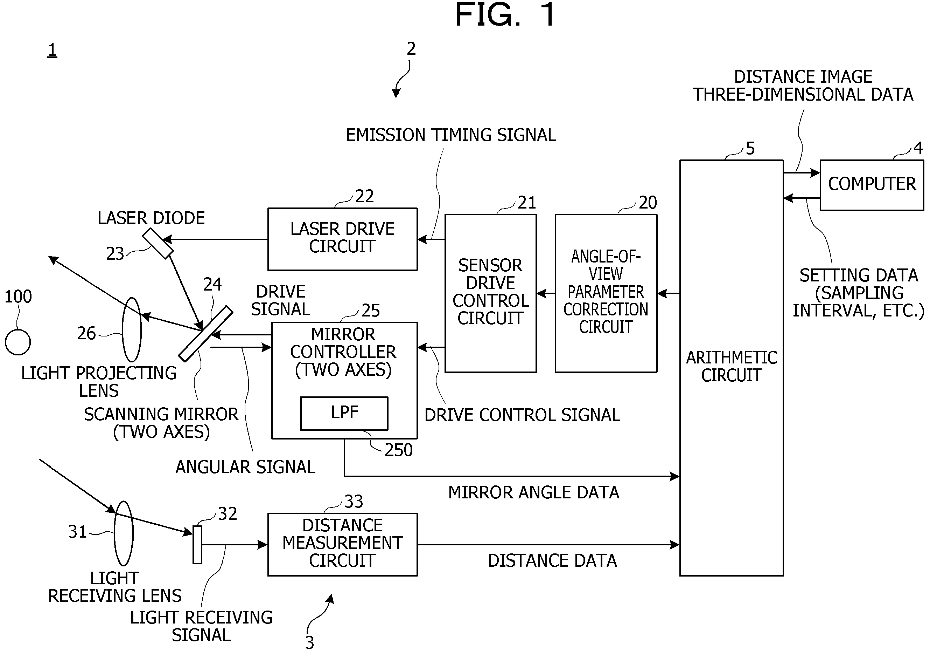

FIG. 1 is a diagram illustrating an example of a laser sensor according to an embodiment. The laser sensor illustrated in FIG. 1 includes a sensor body 1 and a computer 4. The sensor body 1 includes a light projecting unit 2, a light receiving unit 3, and an arithmetic circuit 5.

The light projecting unit 2 includes an angle-of-view parameter correction circuit 20, a sensor drive control circuit 21, a laser drive circuit 22, a laser diode 23, a two-axis scanning mirror 24, a two-axis mirror controller 25, and a light projecting lens 26. The laser diode 23 is an exemplary laser light source. The two-axis scanning mirror 24 may be formed by, for example, a two-dimensional Micro Electro Mechanical Systems (MEMS) mirror. As will be described later, the angle-of-view parameter correction circuit 20 corrects an angle-of-view parameter (or angle-of-view control amount) including a scanning angle range and a shift amount output by the arithmetic circuit 5, and supplies it to the sensor drive control circuit 21. The sensor drive control circuit 21 supplies a light emission timing signal indicating light emission timing of the laser diode 23 to the laser drive circuit 22.

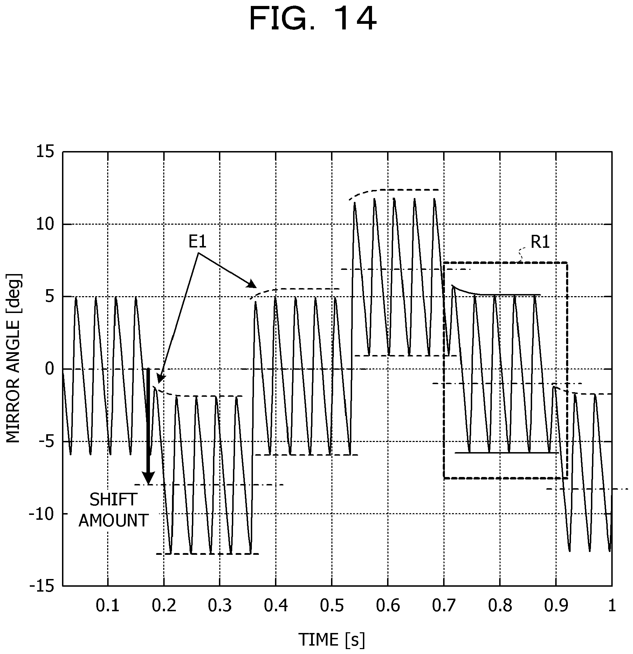

The laser drive circuit 22 causes the laser diode 23 to emit light at the light emission timing indicated by the light emission timing signal. Furthermore, the sensor drive control circuit 21 supplies a drive control signal for driving the scanning mirror 24 on two axes to the mirror controller 25. The mirror controller 25 outputs a drive signal for driving the scanning mirror 24 on two axes according to the drive control signal to drive the scanning mirror 24 with a well-known drive unit (not illustrated). For example, a sinusoidal drive signal (e.g., drive current), which is an example of a non-linear waveform, is used for driving the scanning mirror 24 in the horizontal direction, and a sawtooth drive signal (e.g., drive current), which is an example of a linear waveform, is used for driving the scanning mirror 24 in the vertical direction orthogonal to the horizontal direction. The mirror controller 25 includes an LPF 250 for suppressing generation of vibration caused by resonance point excitation in acute-angled portions at upper and lower ends of the sawtooth wave in the sawtooth drive signal used to drive the scanning mirror 24 in the vertical direction. The sawtooth drive signal used to drive the scanning mirror 24 in the vertical direction drives the scanning mirror 24 through the LPF 250. Accordingly, generation of vibration due to the resonance point excitation is suppressed, and a high-frequency component is removed due to characteristics of the LPF 250, whereby the acute-angled portions at upper and lower ends of the sawtooth wave become a rounded waveform as will be described later with reference to FIG. 14.

Note that a drive signal having a linear waveform may be used for driving the scanning mirror 24 in the horizontal direction, and a drive signal having a non-linear waveform may be used for driving the scanning mirror 24 in the vertical direction. The horizontal direction is an example of a first direction, and the vertical direction is an example of a second direction orthogonal to the horizontal direction (first direction). The laser sensor may have any angular arrangement with respect to a horizontal plane, for example.

A mirror angle of the scanning mirror 24 is detected by a well-known detection unit (not illustrated), and an angular signal indicating the mirror angle is supplied to the mirror controller 25. In FIG. 1, the scanning mirror 24 is illustrated to include the drive unit and the detection unit described above for convenience of explanation. The mirror controller 25 generates mirror angle data indicating the mirror angle of the scanning mirror 24 according to the angular signal, and supplies it to the arithmetic circuit 5. With this arrangement, a laser beam emitted from the laser diode 23 is reflected (or deflected) by the scanning mirror 24, and performs scanning of the scanning angle range through the light projecting lens 26, which is, for example, raster scanning.

According to such raster scanning, the laser beam (or laser pulse) scans a measurement range at a position a certain distance away from the sensor body 1. This measurement range has a width that corresponds to the distance in which the laser beam moves from one end to the other end of the scanning angle range substantially parallel to the horizontal plane (or the ground surface), for example, at a position a certain distance away from the sensor body 1. Furthermore, this measurement range has a height that corresponds to the distance in which the laser beam moves from the lowest point to the highest point of the scanning angle range in the vertical direction orthogonal to the horizontal plane at a position a certain distance away from the sensor body 1. That is, the measurement range refers to the entire region scanned by the laser beam at a position a certain distance away from the sensor body 1. Therefore, when the light emission timing of the laser beam is constant, the measurement range becomes narrower and sampling density within the measurement range becomes denser as the distance from the sensor body 1 becomes shorter. On the other hand, when the light emission timing of the laser beam is constant, the measurement range becomes wider and the sampling density within the measurement range becomes coarser as the distance from the sensor body 1 becomes longer.

The light receiving unit 3 includes a light receiving lens 31, a photodetector 32, and a distance measurement circuit 33. Reflected light from a measurement target 100 is detected by the photodetector 32 through the light receiving lens 31. The photodetector 32 supplies a light receiving signal representing the detected reflected light to the distance measurement circuit 33. The distance measurement circuit 33 measures a Time Of Flight (TOF) ΔT from when the laser beam is emitted from the light projecting unit 2 until when the laser beam is reflected by the measurement target 100 and returns to the light receiving unit 3. As a result, the distance measurement circuit 33 optically measures the distance to the measurement target 100, and supplies distance data indicating the measured distance to the arithmetic circuit 5. Here, when a light speed is expressed by c (approx. 300,000 km/s), the distance to the measurement target 100 may be obtained from (c x ΔT)/2, for example.

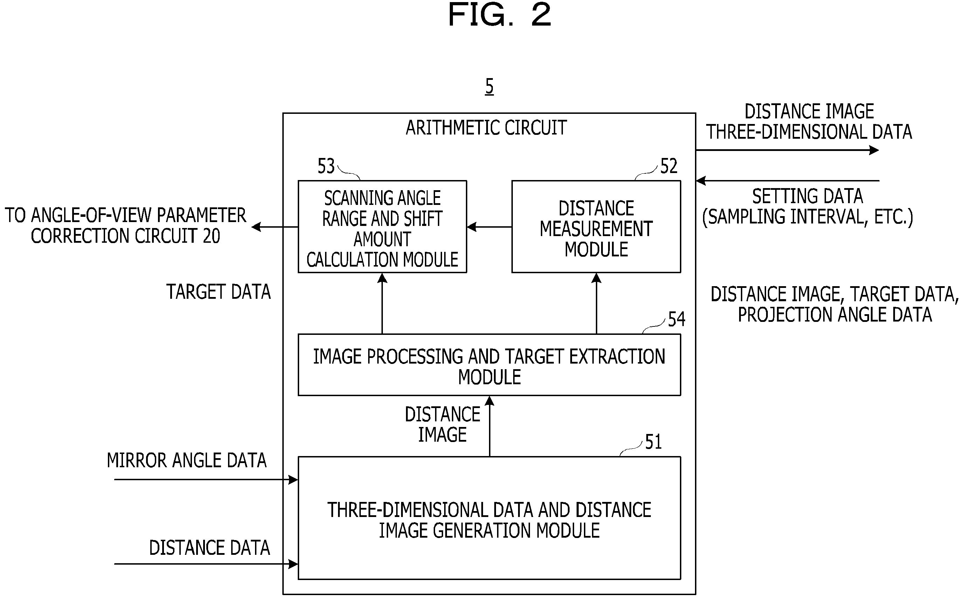

FIG. 2 is a functional block diagram illustrating an example of the arithmetic circuit illustrated in FIG. 1. The arithmetic circuit 5 may be formed by, for example, a processor. The processor may implement a function of each of modules 51 to 54 illustrated in FIG. 2 by executing a program stored in a memory. In this example, the arithmetic circuit 5 includes a three-dimensional data and distance image generation module 51, a distance measurement module 52, a scanning angle range and shift amount calculation module 53, and an image processing and target extraction module 54. The arithmetic circuit 5 is an example of a changing means that changes the measurement range such that the sampling density becomes a certain level or more according to the measured distance to the measurement target and the detected orientation of the measurement target. Changing the measurement range means expanding or narrowing the size of the measurement range. The size of the measurement range is widened by the width of the scanning angle range widened, and is narrowed by the width of the scanning angle range narrowed.

The three-dimensional data and distance image generation module 51 is an example of a distance image generation means that inputs mirror angle data and distance data, generates a distance image from the distance data, and generates three-dimensional data from the distance image and the mirror angle data. Furthermore, the three-dimensional data and distance image generation module 51 generates projection angle data indicating a projection angle of the laser beam from the mirror angle data. The distance image is an image in which distance values at respective ranging points are arranged in the order of raster scanning sampling. The three-dimensional data may be generated by performing conversion using the distance value and the projection angle data. The three-dimensional data may be output to the computer 4. In a similar manner, the distance image may also be output to the computer 4.

The image processing and target extraction module 54 is an example of a target extraction means that extracts data of the measurement target 100 from the distance image in a case where the measurement target 100 is present within the scanning angle range having been subject to the raster scanning. A method for extracting the measurement target 100 from the distance image is not particularly limited, and for example, the measurement target 100 may be extracted using a well-known method. For example, in a case where the measurement target 100 is a human, it is possible to extract the measurement target 100 by detecting, from the distance image, a shape of a posture or the like that may be taken by the human. Furthermore, as another example of target designation, there is also an extraction method in which an obtained distance image or three-dimensional image is displayed on a display and a desired position on the screen is designated (clicked) or a range is designated with a mouse or the like. The image processing and target extraction module 54 supplies the projection angle data, the distance data, and the extracted data of the measurement target 100 (hereinafter also referred to as "target data") to the distance measurement module 52, and supplies the target data to the scanning angle range and shift amount calculation module 53.

The distance measurement module 52 is an example of a first calculation means (or first calculation unit) that calculates a distance to the position of the center of gravity of the measurement target 100 from the extracted target data and calculates an azimuth angle to the position of the center of gravity of the measurement target 100, for example, from the projection angle data and the extracted target data. A method for calculating the center of gravity of the measurement target 100 is not particularly limited, and for example, it may be calculated using a well-known method. Furthermore, a method for calculating the azimuth angle to the measurement target 100 is not particularly limited, and for example, it may be calculated using a well-known method.

The scanning angle range and shift amount calculation module 53 calculates each of setting values of the scanning angle range and the shift amount of the scanning angle range on the basis of the distance and the azimuth angle to the position of the center of gravity of the measurement target 100. Each of the setting values of the scanning angle range and the shift amount of the scanning angle range is calculated in such a manner that a desired sampling interval (i.e., sampling density) input from the computer 4 in advance is achieved and the measurement target 100 is detected near the center of the scanning angle range. The scanning angle range and shift amount calculation module 53 is an example of a second calculation means (second calculation unit) that calculates the setting values of the scanning angle range and the shift amount in such a manner that the measurement target 100 is detected near the center of the scanning angle range on the basis of the distance and the azimuth angle to the position of the center of gravity of the measurement target 100. The scanning angle range and shift amount calculation module 53 supplies the setting values to the sensor drive control circuit 21, and proceeds to the next measurement. With the scanning angle range shifted, it becomes possible to shift the center of the scanning angle range to change the area covered by the scanning angle range. The scanning angle range and shift amount calculation module 53 is an exemplary setting means that sets mirror drive conditions for supplying the drive control signal for driving the scanning mirror 24 on two axes to the mirror controller 25 in the sensor drive control circuit 21 via the angle-of-view parameter correction circuit 20. By repeating the process as described above, the arithmetic circuit 5 is enabled to perform measurement in which the interval of the sampling points (or ranging points) (i.e., sampling interval) by the laser beam is at a certain level or more even when the distance to the measurement target 100 changes. The sampling interval is also referred to as "sampling density" hereinafter.

However, in a case where a measurement distance becomes shorter and the scanning angle range exceeds the maximum scanning angle range (i.e., maximum operating angle range of the scanning mirror 24), it is possible to perform the measurement in the maximum scanning angle range. Furthermore, in a case where the shift amount of the scanning angle range becomes larger and one side of the scanning angle range exceeds the corresponding side of the maximum operating angle range (i.e., operating limit), it is possible to prioritize the position of the operating limit of the maximum operating angle range to reduce the shift amount. Those controls may be performed by the scanning angle range and shift amount calculation module 53. This makes it possible to avoid breakage of the scanning mirror 24 caused by excessive driving.

In a case where the measurement target 100 is not present within the scanning angle range, the image processing and target extraction module 54 does not output the target data. In this case, the scanning angle range and shift amount calculation module 53 may reset the scanning angle range to, for example, the maximum scanning angle range, and may perform scanning based on the maximum scanning angle range.

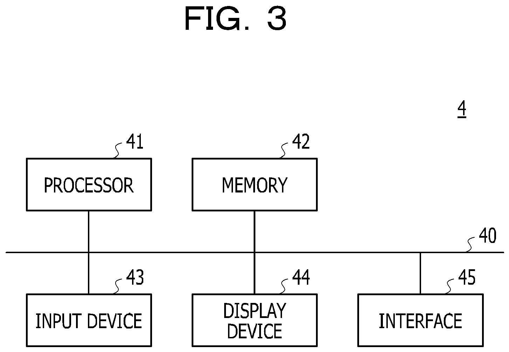

The computer 4 may have a configuration illustrated in FIG. 3, for example. FIG. 3 is a block diagram illustrating an exemplary computer. The computer 4 illustrated in FIG. 3 includes a processor 41, a memory 42, an input device 43, a display device 44, and an interface (or communication device) 45, which are mutually connected via a bus 40. The processor 41 may be formed by, for example, a Central Processing Unit (CPU) or the like, and executes a program stored in the memory 42 to control the entire computer 4. The memory 42 may be formed by, for example, a computer-readable storage medium including a non-transitory computer-readable storage medium such as a semiconductor memory, a magnetic recording medium, an optical recording medium, or a magneto-optical recording medium. The memory 42 stores various programs including a distance measurement program to be executed by the processor 41, various types of data, and the like.

The input device 43 may be formed by, for example, a keyboard or the like to be operated by a user (or operator), and is used to input commands and data to the processor 41. The display device 44 displays a message to the user, a measurement result of a distance measurement process, and the like. The interface 45 communicably connects the computer 4 with another computer and the like. In this example, the computer 4 is connected to the arithmetic circuit 5 via the interface 45.

Note that the computer 4 is not limited to have a hardware configuration in which components of the computer 4 are connected via the bus 40. For example, a general-purpose computer may be used as the computer 4.

The input device 43 and the display device 44 of the computer 4 may be omitted. Furthermore, in a case of a module, a semiconductor chip, or the like in which the interface 45 of the computer 4 is further omitted, the output of the sensor body 1 (i.e., output of the arithmetic circuit 5) may be connected to the bus 40 or may be directly connected to the processor 41. For example, in a case where the computer 4 is formed by a semiconductor chip or the like, the semiconductor chip or the like may be provided inside the sensor body 1. The computer 4 may include the arithmetic circuit 5, for example. In this case, the computer 4 (i.e., processor 41 and memory 42) forms an example of the changing means that changes the measurement range such that the sampling density becomes a certain level or more according to the measured distance to the measurement target and the detected orientation of the measurement target.

The three-dimensional data and distance image generation module 51 of the arithmetic circuit 5 of the laser sensor generates a distance image and three-dimensional data, and thus it may be called a three-dimensional (3D) sensor.

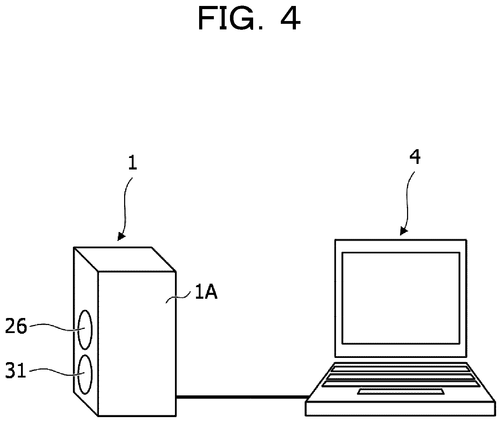

FIG. 4 is a diagram illustrating an example of a housing of the sensor body. FIG. 4 illustrates an example in which the sensor body 1 of a distance measurement device is connected to the computer 4 formed by a Personal Computer (PC) for convenience of explanation. The sensor body 1 includes a housing 1A, and the light projecting unit 2, the light receiving unit 3, and the arithmetic circuit 5 are housed in the housing 1A. In this example, the light projecting lens 26 of the light projecting unit 2 and the light receiving lens 31 of the light receiving unit 3 are arranged on one side surface of the housing 1A.

Note that the computer 4 may be separate from the laser sensor. In this case, the laser sensor may include only the sensor body 1, and the computer 4 may be formed by, for example, a cloud computing system or the like. Furthermore, at least a part of the angle-of-view parameter correction circuit 20, sensor drive control circuit 21, and mirror controller 25 may be formed by the processor forming the arithmetic circuit 5.

The computer 4 may further execute at least a part of the processing of the arithmetic circuit 5, angle-of-view parameter correction circuit 20, sensor drive control circuit 21, and mirror controller 25.

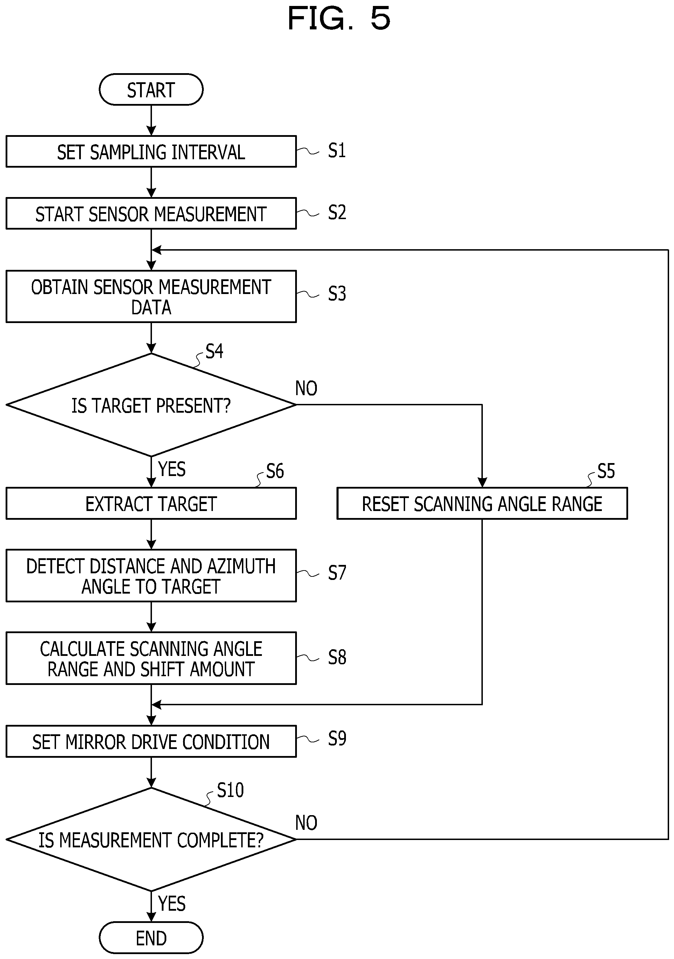

FIG. 5 is a flowchart for explaining an example of the distance measurement process according to the first embodiment. In FIG. 5, in step S1, the computer 4 starts the distance measurement process, and sets setting data including the sampling interval (sampling density). In step S2, the computer 4 starts measurement using the sensor body 1.

In step S3, the three-dimensional data and distance image generation module 51 of the arithmetic circuit 5 obtains measurement data from the sensor body 1. The measurement data to be obtain includes the distance data from the distance measurement circuit 33 and the mirror angle data from the mirror controller 35. Therefore, in step S3, the three-dimensional data and distance image generation module 51 generates three-dimensional data from the distance data, generates a distance image from the three-dimensional data, and generates projection angle data from the mirror angle data. The three-dimensional data may be output to the computer 4 as needed.

In step S4, the image processing and target extraction module 54 of the arithmetic circuit 5 determines whether or not the measurement target 100 is present within the scanning angle range having been subject to the raster scanning, and the process proceeds to step S5 if the determination result is NO while the process proceeds to step S6 if the determination result is YES. It is possible to determine whether or not the measurement target 100 is present within the scanning angle range having been subject to the raster scanning using a well-known method.

In step S5, since the target data is not output from the image processing and target extraction module 54, the scanning angle range and shift amount calculation module 53 of the arithmetic circuit 5 resets the scanning angle range to the maximum scanning angle range, and the process proceeds to step S9 to be described later. In step S6, in the case where the measurement target 100 is present within the scanning angle range having been subject to the raster scanning, the image processing and target extraction module 54 of the arithmetic circuit 5 extracts the measurement target 100 from the distance image, and obtains target data of the extracted measurement target 100.

In step S7, the distance measurement module 52 of the arithmetic circuit 5 calculates a distance and an azimuth angle to the position of the center of gravity of the measurement target 100 from the extracted target data and the projection angle data, and stores them as needed.

In step S8, the scanning angle range and shift amount calculation module 53 of the arithmetic circuit 5 calculates each of setting values of the scanning angle range and the shift amount of the scanning angle range in such a manner that desired sampling density input from the computer 4 in advance is achieved on the basis of the distance and the azimuth angle to the position of the center of gravity of the measurement target 100 calculated or stored in step S7. In step S9, the scanning angle range and shift amount calculation module 53 of the arithmetic circuit 5 sets mirror drive conditions for supplying the drive control signal for driving the scanning mirror 24 on two axes to the mirror controller 25 in the sensor drive control circuit 21. Specifically, the scanning angle range and shift amount calculation module 53 supplies each of the calculated setting values of the scanning angle range and the shift amount of the scanning angle range to the sensor drive control circuit 21. Note that, if the scanning angle range is reset in step S5, the mirror drive conditions are set in step S9 on the basis of the reset scanning angle range.

In step S10, the computer 4 determines whether or not the distance measurement process has been complete, and the process returns to step S3 if the determination result is NO while the process is terminated if the determination result is YES. Therefore, with the process as described above repeated until the determination result in step S10 becomes YES, it becomes possible to perform measurement in which the sampling interval is at a certain level or more even when the distance to the measurement target 100 changes.

According to the present embodiment, it becomes possible to measure the distance to the measurement target with certain or higher sampling density within the measurement range even when the distance to the measurement target varies. This makes it possible to satisfy both the requirement to widen the measurement range and perform stable high-precision measurement and the requirement to make the sampling density within the measurement range denser and perform high-resolution measurement.

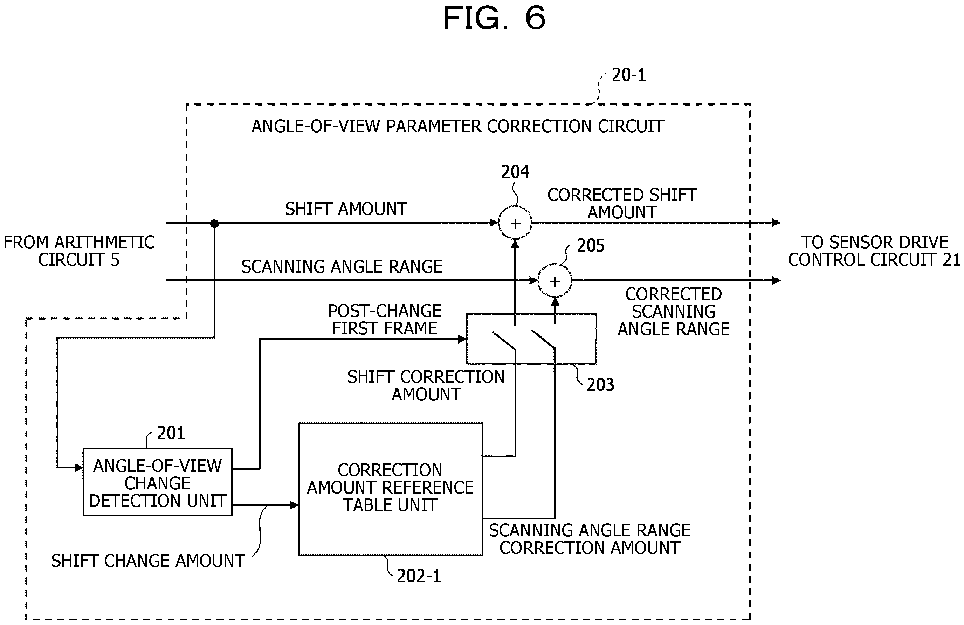

FIG. 6 is a functional block diagram illustrating an example of the angle-of-view parameter correction circuit according to the first embodiment. An angle-of-view parameter correction circuit 20-1 illustrated in FIG. 6 includes an angle-of-view change detection unit 201, a correction amount reference table unit 202-1, a switching circuit 203, and adder circuits 204 and 205.

The shift amount from the arithmetic circuit 5 illustrated in FIG. 1 is input to the angle-of-view change detection unit 201 and to the adder circuit 204. Furthermore, the scanning angle range from the arithmetic circuit 5 is input to the adder circuit 205. When the angle-of-view change detection unit 201 detects an angle-of-view change from the shift amount, it supplies a signal indicating a first frame immediately after the change (hereinafter also referred to as "post-change first frame") to the switching circuit 203, and also supplies a shift change amount to the correction amount reference table unit 202-1. The angle-of-view change detection unit 201 is an example of an angle-of-view change detection means (or angle-of-view change unit) that detects an angle-of-view change on the basis of the shift amount in the angle-of-view parameter including the scanning angle range and the shift amount of the scanning angle range set on the basis of the distance and the azimuth angle to the measurement target 100. The angle-of-view change detection means outputs the signal indicating the first frame immediately after the change and the shift change amount. In this example, the shift amount in the scanning angle range is a shift amount in the vertical direction.

The correction amount reference table unit 202-1 includes, for example, a reference table and an interpolation unit, refers to the reference table on the basis of the shift change amount, and reads a shift correction amount and a scanning angle range correction amount that correspond to an expected deviation amount d in the first frame to supply them to the switching circuit 203. The correction amount reference table unit 202-1 is an example of a correction amount generation means (or correction amount generation unit) that generates the shift correction amount and the scanning angle range correction amount that correspond to the expected deviation amount d in the first frame using at least the shift change amount. In a case where the reference table does not store the shift change amount and the scanning angle range correction amount that correspond to the shift change amount, the correction amount reference table unit 202-1 uses the interpolation unit to obtain the corresponding shift correction amount and scanning angle range correction amount on the basis of linear interpolation using prior and subsequent shift change amounts or the like.

In response to the signal indicating the post-change first frame, the switching circuit 203 supplies the shift correction amount to the adder circuit 204, and also supplies the scanning angle range correction amount to the adder circuit 205. The adder circuit 204 outputs a corrected shift amount obtained by adding the shift amount and the shift correction amount to the sensor drive control circuit 21. The adder circuit 205 outputs a corrected scanning angle range obtained by adding the scanning angle range and the scanning angle range correction amount to the sensor drive control circuit 21 illustrated in FIG. 1. The switching circuit 203 and the adder circuits 204 and 205 are examples of an angle-of-view parameter correction means (or angle-of-view parameter correction unit) that outputs a corrected angle-of-view parameter including the corrected shift amount and the corrected scanning angle range in the first frame in response to the signal indicating the post-change first frame. Specifically, the angle-of-view parameter correction means outputs, in the first frame, a corrected angle-of-view parameter including the corrected shift amount obtained by correcting the shift amount with the shift correction amount and the corrected scanning angle range obtained by correcting the scanning angle range with the scanning angle range correction amount. The angle-of-view parameter correction means outputs an angle-of-view parameter including the shift amount and the scanning angle range in the second and subsequent frames.

In this case, the sensor drive control circuit 21 and the mirror controller 25 illustrated in FIG. 1 are examples of a drive means (or drive unit) that generates a first drive signal having a non-linear waveform that rotationally drives the scanning mirror 24 in the horizontal direction to carry out driving. The drive means generates a second drive signal having a linear waveform that rotationally drives the scanning mirror 24 in the vertical direction on the basis of the output of the angle-of-view parameter correction means, and performs driving through the LPF 250 of the mirror controller 25.

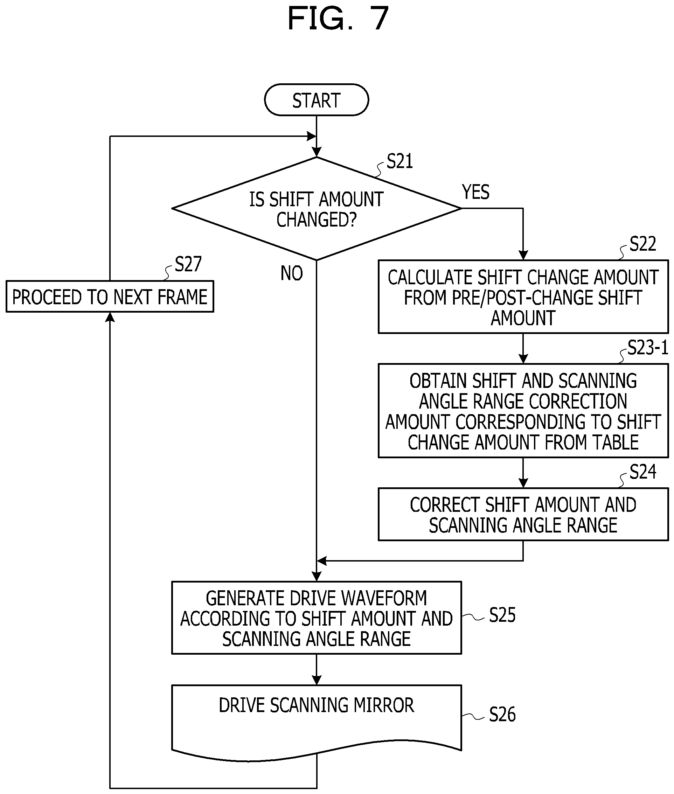

FIG. 7 is a flowchart for explaining an exemplary process of the angle-of-view parameter correction circuit 20-1, the sensor drive control circuit 21, and the mirror controller 25 according to the first embodiment. The angle-of-view parameter correction circuit 20-1 may be formed by, for example, a processor. The processor may implement the function of each of the units 201, 202-1, and 203 to 205 illustrated in FIG. 6 by executing a program stored in a memory.

In FIG. 7, in step S21, the processor executes the function of the angle-of-view change detection unit 201 to determine whether or not the shift amount from the arithmetic circuit 5 has changed. The process proceeds to step S22 if a determination result in step S21 is YES, and the process proceeds to step S25 to be described later if the determination result in step S21 is NO. In step S22, the processor executes the function of the angle-of-view change detection unit 201 to supply the signal indicating the post-change first frame to the switching circuit 203 and to calculate the shift change amount from the shift amount before and after the change. In step S23-1, the processor executes the function of the correction amount reference table unit 202-1 to obtain, from the reference table, the shift correction amount and the scanning angle range correction amount that correspond to the expected deviation amount in the first frame using the shift change amount. In step S24, the processor implements the function of the switching circuit 203 to supply the shift correction amount and the scanning angle range correction amount to the adder circuits 204 and 205 in response to the signal indicating the post-change first frame, thereby correcting the angle-of-view parameter. The adder circuit 204 outputs the corrected shift amount obtained by adding the shift amount and the shift correction amount, and the adder circuit 205 outputs the corrected scanning angle range obtained by adding the scanning angle range and the scanning angle range correction amount.

In step S25, the sensor drive control circuit 21 generates a drive control signal with a drive waveform according to the corrected shift amount and the corrected scanning angle range from the adder circuits 204 and 205. In step S26, the mirror controller 25 drives the scanning mirror 24 with the sawtooth drive signal used to drive the scanning mirror 24 in the vertical direction according to the drive control signal. Note that the sinusoidal drive signal used to drive the scanning mirror 24 in the horizontal direction is not subject to the correction by the angle-of-view parameter correction circuit 20-1, and thus descriptions thereof will be omitted. Subsequent to step S26, the process proceeds to step S27. In step S27, the processor executes the function of the angle-of-view change detection unit 201 to obtain the shift amount of the next frame from the arithmetic circuit 5, and the process returns to step S21.

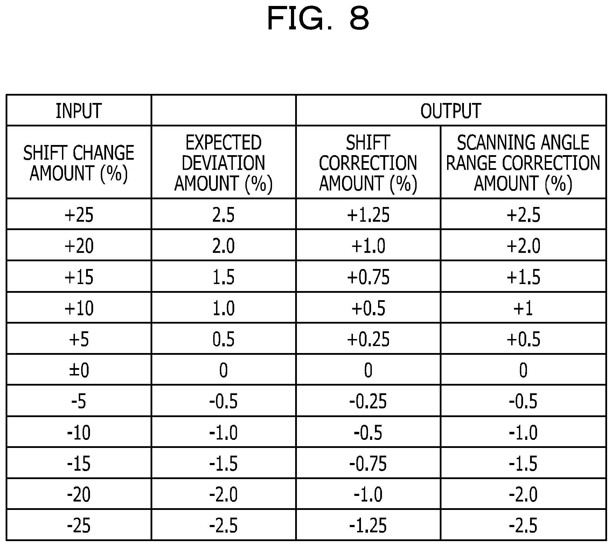

FIG. 8 is a diagram illustrating an example of the reference table. In the example illustrated in FIG. 8, the reference table stores a shift change amount (%) as exemplary input, an expected deviation amount (%) in the first frame, and a shift correction amount (%) and a scanning angle range correction amount (%) as exemplary output. The shift change amount, the expected deviation amount, the shift correction amount, and the scanning angle range correction amount of the reference table may be calculated in advance under conditions that, for example, only the shift amount changes and neither the scanning angle range nor the cutoff frequency of the LPF 250 changes. The expected deviation amount changes depending on the shift amount and the cutoff frequency of the LPF 250.

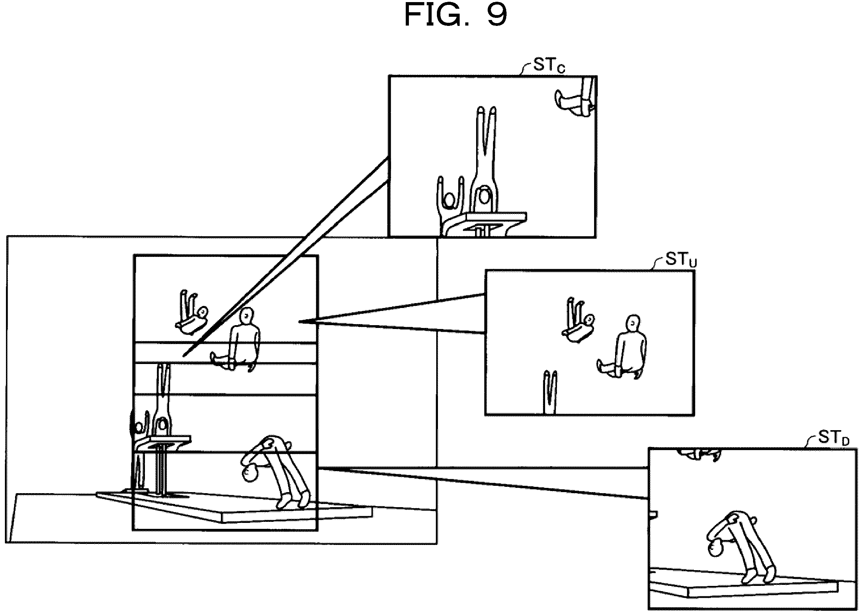

FIG. 9 is a diagram for explaining an example of the measurement range in the vertical direction. In this example, the measurement target 100 is a gymnast who performs a vault routine, and the angle of view changes according to the movement of the gymnast. In FIG. 9, ST_{C} indicates a measurement range at the reference angle of view, ST_{U} indicates a measurement range moved upward with respect to ST_{C}, and ST_{D} indicates a measurement range moved downward with respect to ST_{C}. Note that, in the example of FIG. 9, the gymnast starts the vault routine in the measurement range ST_{C}, the gymnast jumps the vault in the measurement range ST_{U}, and the gymnast lands in the measurement range ST_{D}.

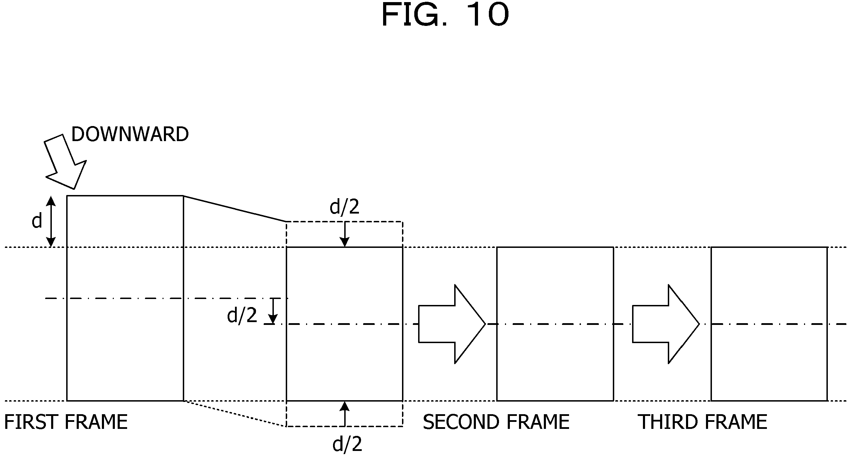

FIG. 10 is a diagram for explaining processing when the measurement range is moved downward. FIG. 10 corresponds to a case where the measurement range is moved from ST_{C} to ST_{D} in FIG. 9, for example. In a case where the expected deviation amount is d (deg), the angle-of-view parameter, that is, the scanning angle range and the shift amount are changed as illustrated in FIG. 10 only for the first frame immediately after the movement of the measurement range. Specifically, the entire measurement range in the first frame is offset downward by d/2 (deg), and the vertical height is narrowed by d (deg). As a result, it becomes possible to control the angle of view equally between the first frame immediately after the movement of the measurement range and the second and subsequent frames.

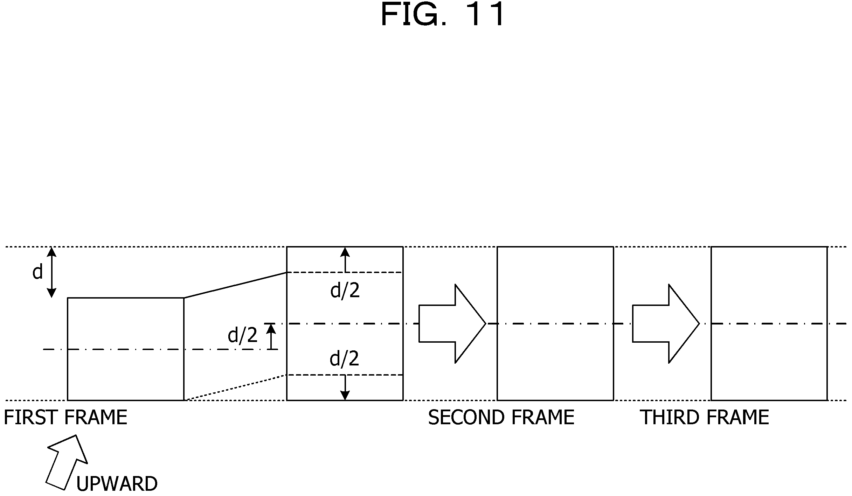

FIG. 11 is a diagram for explaining processing when the measurement range is moved upward. FIG. 11 corresponds to a case where the measurement range is moved from ST_{C} to ST_{U} in FIG. 9, for example. In a case where the expected deviation amount is d (deg), the angle-of-view parameter, that is, the scanning angle range and the shift amount are changed as illustrated in FIG. 11 only for the first frame immediately after the movement of the measurement range. Specifically, the entire measurement range in the first frame is offset upward by d/2 (deg), and the vertical height is widened by d (deg). As a result, it becomes possible to control the angle of view equally between the first frame immediately after the movement of the measurement range and the second and subsequent frames.

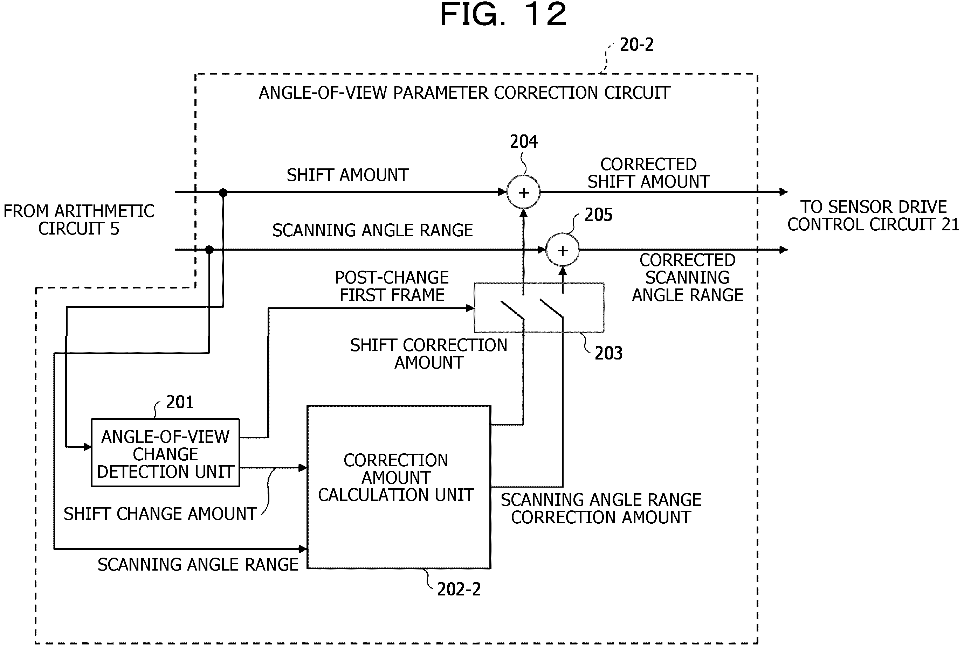

FIG. 12 is a functional block diagram illustrating an example of an angle-of-view parameter correction circuit according to a second embodiment. In FIG. 12, parts same as those in FIG. 6 are denoted by the same reference signs. An angle-of-view parameter correction circuit 20-2 illustrated in FIG. 12 includes an angle-of-view change detection unit 201, a correction amount calculation unit 202-2, a switching circuit 203, and adder circuits 204 and 205.

The shift amount from the arithmetic circuit 5 illustrated in FIG. 1 is input to the angle-of-view change detection unit 201 and to the adder circuit 204. Furthermore, a scanning angle range from the arithmetic circuit 5 is input to the correction amount calculation unit 202-2 and to the adder circuit 205. When the angle-of-view change detection unit 201 detects an angle-of-view change from the shift amount, it supplies a signal indicating a post-change first frame to the switching circuit 203, and also supplies a shift change amount to the correction amount calculation unit 202-2.

The correction amount calculation unit 202-2 calculates a shift correction amount and a scanning angle range correction amount that correspond to an expected deviation amount d in the first frame obtained from the shift change amount, the scanning angle range, and a cutoff frequency of an LPF 250 of a mirror controller 25, and supplies them to the switching circuit 203. The correction amount calculation unit 202-2 is an example of the correction amount generation means that generates the shift correction amount and the scanning angle range correction amount that correspond to the expected deviation amount d in the first frame using the shift change amount, the scanning angle range, and the cutoff frequency of the LPF 250. In response to the signal indicating the post-change first frame, the switching circuit 203 supplies the shift correction amount to the adder circuit 204, and also supplies the scanning angle range correction amount to the adder circuit 205.

The adder circuit 204 outputs a corrected shift amount obtained by adding the shift amount and the shift correction amount to the sensor drive control circuit 21. The adder circuit 205 outputs a corrected scanning angle range obtained by adding the scanning angle range and the scanning angle range correction amount to the sensor drive control circuit 21 illustrated in FIG. 1.

As in the case of the first embodiment described above, contents of a reference table may be calculated in advance under conditions that, for example, only the shift amount changes and neither the scanning angle range nor the cutoff frequency of the LPF 250 of the mirror controller 25 changes. On the other hand, in a case where the scanning angle range and the cutoff frequency of the LPF 250 of the mirror controller 25 change, it is sufficient if the shift correction amount and the scanning angle range correction amount are calculated at a time of dynamically changing the angle of view as in the present embodiment.

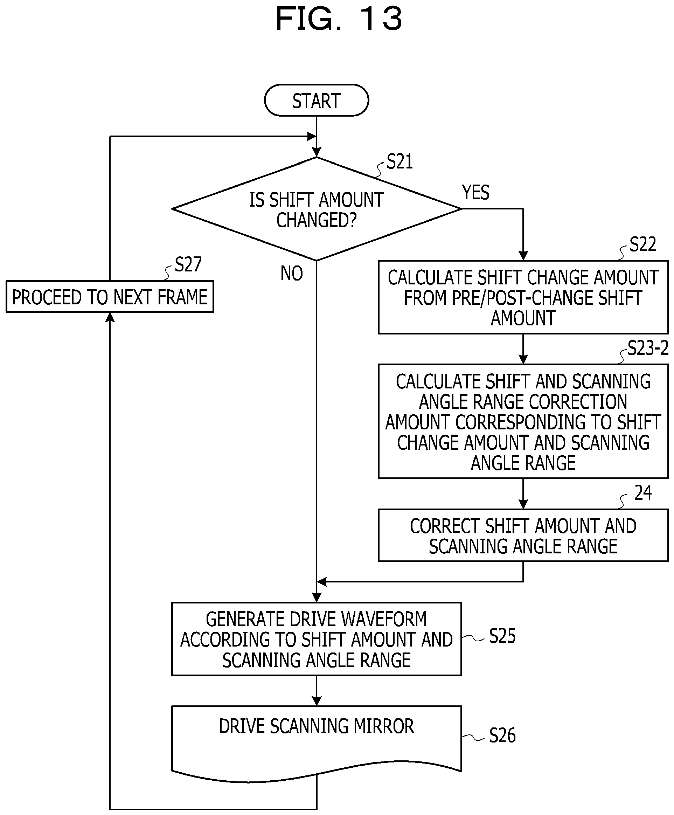

FIG. 13 is a flowchart for explaining an exemplary process of the angle-of-view parameter correction circuit 20-2, the sensor drive control circuit 21, and the mirror controller 25 according to the second embodiment. In FIG. 13, steps same as those in FIG. 7 are denoted by the same reference signs. The angle-of-view parameter correction circuit 20-2 may be formed by, for example, a processor. The processor may implement the function of each of the units 201, 202-2, and 203 to 205 illustrated in FIG. 12 by executing a program stored in a memory.

In FIG. 13, in step S21, the processor executes the function of the angle-of-view change detection unit 201 to determine whether or not the shift amount from the arithmetic circuit 5 has changed. The process proceeds to step S22 if a determination result in step S21 is YES, and the process proceeds to step S25 to be described later if the determination result in step S21 is NO. In step S22, the processor executes the function of the angle-of-view change detection unit 201 to supply the signal indicating the post-change first frame to the switching circuit 203 and to calculate the shift change amount from the shift amount before and after the change. In step S23-2, the processor executes the function of the correction amount calculation unit 202-2. Specifically, the processor calculates the shift correction amount and the scanning angle range correction amount that correspond to the expected deviation amount d in the first frame obtained from the shift change amount, the scanning angle range, and the cutoff frequency of the LPF 250 of the mirror controller 25. In step S24, the processor implements the function of the switching circuit 203 to supply the shift correction amount and the scanning angle range correction amount to the adder circuits 204 and 205 in response to the signal indicating the post-change first frame, thereby correcting the angle-of-view parameter. The adder circuit 204 outputs the corrected shift amount obtained by adding the shift amount and the shift correction amount, and the adder circuit 205 outputs the corrected scanning angle range obtained by adding the scanning angle range and the scanning angle range correction amount.

In step S25, the sensor drive control circuit 21 generates a drive control signal with a drive waveform according to the corrected shift amount and the corrected scanning angle range from the adder circuits 204 and 205. In step S26, the mirror controller 25 drives the scanning mirror 24 with the sawtooth drive signal used to drive the scanning mirror 24 in the vertical direction according to the drive control signal. Note that the sinusoidal drive signal used to drive the scanning mirror 24 in the horizontal direction is not subject to the correction by the angle-of-view parameter correction circuit 20-2, and thus descriptions thereof will be omitted. Subsequent to step S26, the process proceeds to step S27. In step S27, the processor executes the function of the angle-of-view change detection unit 201 to obtain the shift amount of the next frame from the arithmetic circuit 5, and the process returns to step S21.

FIG. 14 is a diagram for explaining exemplary movement of the measurement range in the vertical direction in a case where the angle-of-view parameter is not corrected. In FIG. 14, the vertical axis represents a mirror angle of the scanning mirror 24 in the vertical direction in degrees (deg), and the horizontal axis represents a time in seconds (s). Furthermore, E1 represents an expected deviation amount that occurs in the first frame immediately after the measurement range has moved in the vertical direction.

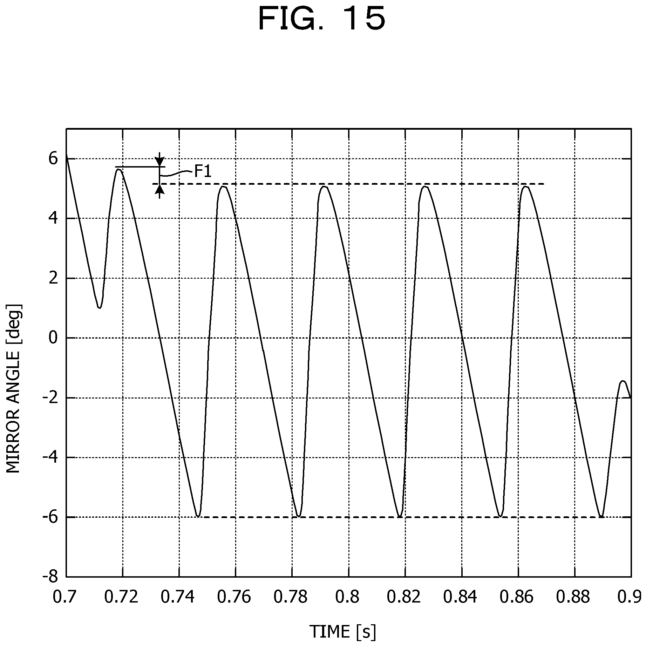

FIG. 15 is a diagram for explaining a time of downward movement of the measurement range in a case where the angle-of-view parameter is not corrected. In FIG. 15, the vertical axis represents a mirror angle of the scanning mirror 24 in the vertical direction in degrees (deg), and the horizontal axis represents a time in seconds (s). FIG. 15 illustrates an enlarged portion R1 surrounded by a thick broken line in FIG. 14. Furthermore, F1 represents an angle of view that changes only in the first frame immediately after the measurement range has moved in the vertical direction.

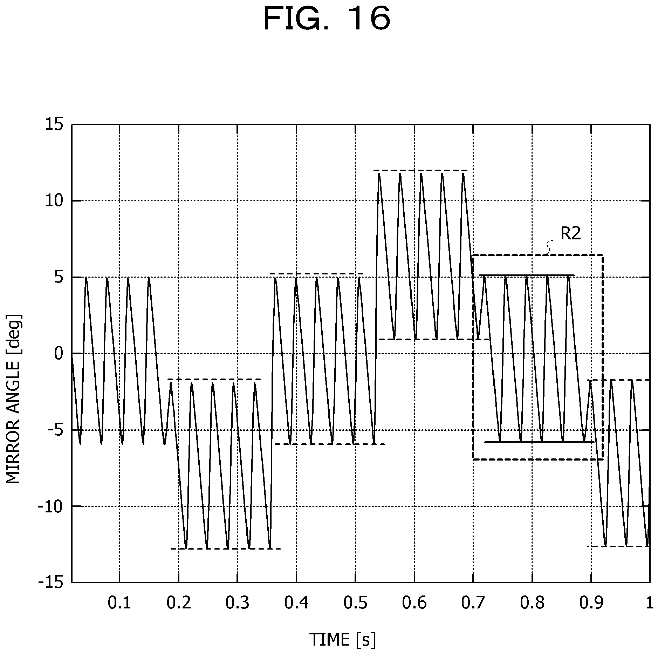

FIG. 16 is a diagram for explaining exemplary movement of the measurement range in the vertical direction in a case where the angle-of-view parameter is corrected. In FIG. 16, the vertical axis represents a mirror angle of the scanning mirror 24 in the vertical direction in degrees (deg), and the horizontal axis represents a time in seconds (s). In FIG. 16, the expected deviation amount E1 as illustrated in FIG. 14 does not occur in the first frame immediately after the measurement range has moved in the vertical direction.

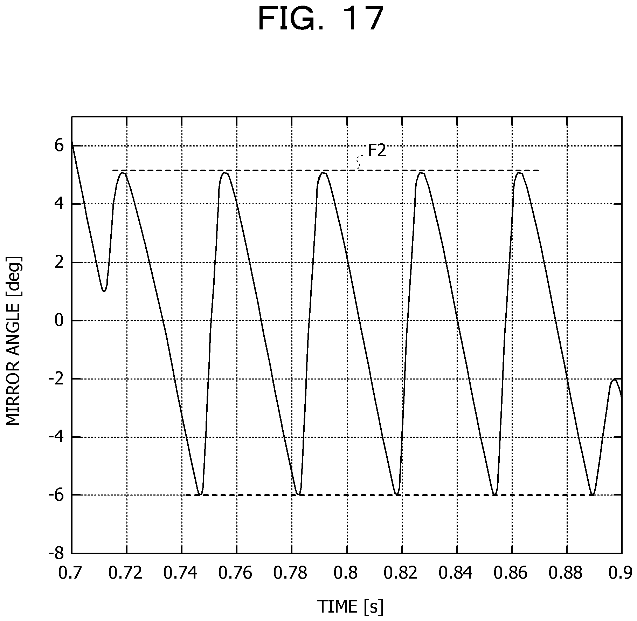

FIG. 17 is a diagram for explaining a time of downward movement of the measurement range in a case where the angle-of-view parameter is corrected. In FIG. 17, the vertical axis represents a mirror angle of the scanning mirror 24 in the vertical direction in degrees (deg), and the horizontal axis represents a time in seconds (s). FIG. 17 illustrates an enlarged portion R2 surrounded by a thick broken line in FIG. 16. In FIG. 17, as indicated by F2, the angle of view is the same between the first frame immediately after the measurement range has moved in the vertical direction and the second and subsequent frames.

In each of the embodiments described above, in angle-of-view control using the scanning mirror of the 3D sensor, the angle-of-view parameter including the scanning angle range and the shift amount determined according to the position of the measurement target is obtained. Before controlling the scanning mirror to which the obtained angle-of-view parameter is applied, it is determined whether or not the angle-of-view change is carried out on the basis of the angle-of-view parameter. In a case where it is determined to carry out the angle-of-view change, the correction amount for adjustment including the scanning angle range correction amount and the shift correction amount to be applied to the first frame (immediately after the change) in which the angle-of-view change is carried out is determined. In this case, the scanning mirror is controlled using the angle-of-view parameter obtained by correcting the angle-of-view parameter with the correction amount for adjustment, that is, the corrected scanning angle range and the corrected shift amount obtained by correcting the scanning angle range and the shift amount with the scanning angle range correction amount and the shift correction amount, respectively. Furthermore, in this case, the control of the scanning mirror to which the angle-of-view parameter including the scanning angle range and the shift amount is applied is performed in the second and subsequent frames. On the other hand, in a case where it is determined not to carry out the angle-of-view change, the control of the scanning mirror to which the angle-of-view parameter including the scanning angle range and the shift amount is applied is performed. According to each of the embodiments described above, it becomes possible to control the angle of view equally between the first frame immediately after the measurement range has moved in a predetermined direction and the second and subsequent frames. Accordingly, according to each of the embodiments described above, the size and the position of the measurement target in a predetermined direction do not change between the first frame and the second and subsequent frames even when the measurement range moves in the predetermined direction, whereby it becomes possible to suppress a decrease in measurement accuracy of the laser sensor for the measurement target having a high moving speed in particular.

The laser sensor is applicable to a scoring assistance system, an in-vehicle system, and the like. An example of the scoring assistance system assists, for example, scoring of a gymnastics routine on the basis of an output of the laser sensor. In this case, the measurement target 100 is a gymnast, and the scoring may be performed by the computer 4 illustrated in FIG. 1 executing a scoring program, for example. It is sufficient if the computer 4 obtains skeleton information of the gymnast using a well-known method on the basis of the three-dimensional data and the distance image from the arithmetic circuit 5. Since the skeleton information of the gymnast includes a three-dimensional position of each joint of the gymnast in each frame, it is possible to recognize elements of a gymnastics routine from the skeleton information to score the gymnastics routine from quality levels of the elements.

Since the moving speed of the gymnast is high in the case of the gymnastics routine, the angle of view of the laser sensor needs to move according to the position of the gymnast. However, according to each of the embodiments described above, it is possible to control the angle of view equally between the first frame immediately after the movement and the second and subsequent frames even when the measurement range moves in the vertical direction, whereby the size and the position of the gymnast in the vertical direction do not change between the first frame and the second and subsequent frames. As a result, it becomes possible to suppress a decrease in the measurement accuracy of the laser sensor even when the moving speed of the gymnast is high, and by using output of such a laser sensor, it becomes possible to perform scoring of the gymnastics routine highly accurately, whereby it becomes possible to improve reliability of the scoring assistance system.

An example of the in-vehicle system recognizes a position, a type, and the like of the measurement target 100 in front of a vehicle, for example, on the basis of the output of the laser sensor. In this case, the type of the measurement target 100 includes a pedestrian, another vehicle, or the like, and the measurement target 100 is recognized by the computer 4 illustrated in FIG. 1 executing a recognition program, for example. It is sufficient if the computer 4 obtains shape information of the measurement target 100 using a well-known method on the basis of the three-dimensional data and the distance image from the arithmetic circuit 5. Since the shape information of the measurement target 100 includes a three-dimensional position of each portion of the measurement target 100 in each frame, it is possible to recognize the position, the type, and the like of the measurement target 100 from the shape information to determine an approaching degree, a level of danger, and the like. Note that, in a case where the laser sensor is applied to the in-vehicle system, the laser sensor itself moves together with the vehicle on which it is mounted, whereby a relative moving speed of the measurement target 100 may be higher. However, according to each of the embodiments described above, it becomes possible to suppress a decrease in the measurement accuracy of the laser sensor even for the measurement target 100 having a higher relative moving speed, whereby it becomes possible to recognize the position, the type, and the like of the measurement target 100 highly accurately and to improve reliability of the in-vehicle system.

Note that serial numbers, such as first and second, assigned to the respective embodiments described above do not indicate the priority of the preferred embodiments.

While the disclosed laser sensor, mirror control method, and program have been described in the embodiments, the present invention is not limited to the embodiments described above, and it is needless to say that various modifications and improvements may be made within the scope of the present invention.

### REFERENCE SIGNS LIST

1Sensor body
1AHousing
2Light projecting unit
3Light receiving unit
4Computer
5Arithmetic circuit
20, 20-1, 20-2Angle-of-view parameter correction circuit
21Sensor drive control circuit
22Laser drive circuit
23Laser diode
24Scanning mirror
25Mirror controller
26Light projecting lens
31Light receiving lens
32Photodetector
33Distance measurement circuit
41Processor
42Memory
51Three-dimensional data and distance image generation module
52Distance measurement module
53Scanning angle range and shift amount calculation module
54Image processing and target extraction module
55Data output module
201Angle-of-view change detection unit
202-1Correction amount reference table unit
202-2Correction amount calculation unit
203Switching circuit
204, 205Adder circuit
250LPF

## Claims

1. A laser sensor that two-dimensionally scans a measurement target by reflecting a laser beam with a scanning mirror that rotates in a first direction and a second direction orthogonal to each other to scan a scanning angle range, the laser sensor comprising:
an angle-of-view change detection means that outputs, when an angle-of-view change is detected on a basis of a shift amount in an angle-of-view parameter that includes the scanning angle range and the shift amount of the scanning angle range in the second direction set on a basis of a distance and an azimuth angle to the measurement target, a signal that indicates a first frame immediately after the change and a shift change amount;
a correction amount generation means that generates a shift correction amount and a scanning angle range correction amount that correspond to an expected deviation amount in the first frame using at least the shift change amount;
an angle-of-view parameter correction means that outputs, in response to the signal, a corrected angle-of-view parameter that includes a corrected shift amount obtained by correcting the shift amount with the shift correction amount and a corrected scanning angle range obtained by correcting the scanning angle range with the scanning angle range correction amount in the first frame, and outputs the angle-of-view parameter that includes the shift amount and the scanning angle range in a second and subsequent frames; and
a drive means that generates a first drive signal that has a non-linear waveform and rotationally drives the scanning mirror in the first direction to drive the scanning mirror, and generates, on a basis of output of the angle-of-view parameter correction means, a second drive signal that has a linear waveform and rotationally drives the scanning mirror in the second direction to drive the scanning mirror through a low-pass filter.

2. The laser sensor according to claim 1, wherein the correction amount generation means refers to a reference table on a basis of the shift change amount to read and output the shift correction amount and the scanning angle range correction amount that correspond to the expected deviation amount in the first frame.

3. The laser sensor according to claim 1, wherein the correction amount generation means calculates and outputs the shift correction amount and the scanning angle range correction amount that correspond to the expected deviation amount in the first frame obtained from the shift change amount, the scanning angle range, and a cutoff frequency of the low-pass filter.

4. The laser sensor according to any one of claims 1 to 3, wherein
the first direction includes a horizontal direction,
the second direction includes a vertical direction,
the first drive signal that has the non-linear waveform includes a sine wave, and
the second drive signal that has the linear waveform includes a sawtooth wave.

5. The laser sensor according to claim 4, wherein
the correction amount generation means is configured to:
in a case where the expected deviation amount at a time when a measurement range moves downward along the vertical direction is d, the measurement range that has a width that corresponds to a distance in which the laser beam moves in the first direction from one end to another end of the scanning angle range at a position a certain distance away from the laser sensor and a height that corresponds to a distance in which the laser beam moves in the second direction from a lowest point to a highest point of the scanning angle range at the position the certain distance away from the laser sensor, offset the entire measurement range downward in a first frame immediately after the movement of the measurement range by d/2 and narrow a vertical height along the vertical direction by d to control the scanning angle range and the shift amount in such a manner that an angle of view becomes equivalent between the first frame immediately after the movement of the measurement range and a second and subsequent frames; and
in a case where the expected deviation amount at a time when the measurement range moves upward along the vertical direction is d, offset the entire measurement range upward in the first frame immediately after the movement of the measurement range by d/2 and widen the vertical height along the vertical direction by d to control the scanning angle range and the shift amount in such a manner that the angle of view becomes equivalent between the first frame immediately after the movement of the measurement range and the second and subsequent frames.

6. The laser sensor according to any one of claims 1 to 5, further comprising:
a target extraction means that extracts target data of the measurement target in a case where the measurement target is present in the scanned scanning angle range;
a first calculation means that calculates a distance to a position of a center of gravity of the measurement target from the extracted target data and calculates an azimuth angle to the position of the center of gravity of the measurement target from projection angle data that indicates a projection angle of the laser beam and the extracted target data; and
a second calculation means that calculates each of setting values of the scanning angle range and the shift amount on a basis of the distance and the azimuth angle to the position of the center of gravity of the measurement target in such a manner that the measurement target is detected near a center of the scanning angle range.

7. A mirror control method that two-dimensionally scans a measurement target by reflecting a laser beam with a scanning mirror that rotates in a first direction and a second direction orthogonal to each other to scan a scanning angle range by lase sensor, a unit of the laser beam configured to:
output, when an angle-of-view change is detected on a basis of a shift amount in an angle-of-view parameter that includes the scanning angle range and the shift amount of the scanning angle range in the second direction set on a basis of a distance and an azimuth angle to the measurement target, a signal that indicates a first frame immediately after the change and a shift change amount,
generate a shift correction amount and a scanning angle range correction amount that correspond to an expected deviation amount in the first frame using at least the shift change amount,
output, in response to the signal, a corrected angle-of-view parameter that includes a corrected shift amount obtained by correcting the shift amount with the shift correction amount and a corrected scanning angle range obtained by correcting the scanning angle range with the scanning angle range correction amount in the first frame,
generate a first drive signal that has a non-linear waveform and rotationally drive the scanning mirror in the first direction to drive the scanning mirror, and generate, on a basis of output of the angle-of-view parameter, a second drive signal that has a linear waveform and rotationally drive the scanning mirror in the second direction to drive the scanning mirror through a low-pass filter,
output the angle-of-view parameter that includes the shift amount and the scanning angle range in a second and subsequent frames,
generate a third drive signal that has a non-linear waveform and rotationally drive the scanning mirror in the first direction to drive the scanning mirror, and generate, on a basis of output of the angle-of-view parameter, a fourth drive signal that has a linear waveform and rotationally drive the scanning mirror in the second direction to drive the scanning mirror through a low-pass filter.

8. The mirror control method according to claim 7, wherein the process of the generation of the shift correction amount and the scanning angle range correction amount includes referring to a reference table on a basis of the shift change amount to read and outputting the shift correction amount and the scanning angle range correction amount that correspond to the expected deviation amount in the first frame.

9. The mirror control method according to claim 7, wherein the process of the generation of the shift correction amount and the scanning angle range correction amount includes calculating and outputting the shift correction amount and the scanning angle range correction amount that correspond to the expected deviation amount in the first frame obtained from the shift change amount, the scanning angle range, and a cutoff frequency of the low-pass filter.

10. The mirror control method according to any one of claims 7 to 9, wherein
the second direction includes a vertical direction, and
the second drive signal that has the linear waveform includes a sawtooth wave, wherein
the process of the generation of the shift correction amount and the scanning angle range correction amount includes:
in a case where the expected deviation amount at a time when a measurement range moves downward along the vertical direction is d, the measurement range that has a width that corresponds to a distance in which the laser beam moves in the first direction from one end to another end of the scanning angle range at a position a certain distance away from the laser sensor and a height that corresponds to a distance in which the laser beam moves in the second direction from a lowest point to a highest point of the scanning angle range at the position the certain distance away from the laser sensor, offset the entire measurement range downward in a first frame immediately after the movement of the measurement range by d/2 and narrow a vertical height along the vertical direction by d to control the scanning angle range and the shift amount in such a manner that an angle of view becomes equivalent between the first frame immediately after the movement of the measurement range and a second and subsequent frames; and
in a case where the expected deviation amount at a time when the measurement range moves upward along the vertical direction is d, offset the entire measurement range upward in the first frame immediately after the movement of the measurement range by d/2 and widen the vertical height along the vertical direction by d to control the scanning angle range and the shift amount in such a manner that the angle of view becomes equivalent between the first frame immediately after the movement of the measurement range and the second and subsequent frames.

11. The mirror control method according to any one of claims 7 to 11, an arithmetic circuit of the laser sensor is configured to
extract target data of the measurement target in a case where the measurement target is present in the scanned scanning angle range,
calculate a distance to a position of a center of gravity of the measurement target from the extracted target data and calculates an azimuth angle to the position of the center of gravity of the measurement target from projection angle data that indicates a projection angle of the laser beam and the extracted target data; and
calculate each of setting values of the scanning angle range and the shift amount on a basis of the distance and the azimuth angle to the position of the center of gravity of the measurement target in such a manner that the measurement target is detected near a center of the scanning angle range.

12. A program that causes a computer with a laser sensor that two-dimensionally scans a measurement target by reflecting a laser beam with a scanning mirror that rotates in a first direction and a second direction orthogonal to each other to scan a scanning angle range to execute a process, the process comprising:
outputting, when an angle-of-view change is detected on a basis of a shift amount in an angle-of-view parameter that includes the scanning angle range and the shift amount of the scanning angle range in the second direction set on a basis of a distance and an azimuth angle to the measurement target, a signal that indicates a first frame immediately after the change and a shift change amount;
generating a shift correction amount and a scanning angle range correction amount that correspond to an expected deviation amount in the first frame using at least the shift change amount;
outputting, in response to the signal, a corrected angle-of-view parameter that includes a corrected shift amount obtained by correcting the shift amount with the shift correction amount and a corrected scanning angle range obtained by correcting the scanning angle range with the scanning angle range correction amount in the first frame, and outputting the angle-of-view parameter that includes the shift amount and the scanning angle range in a second and subsequent frames; and
generating a first drive signal that has a non-linear waveform and rotationally driving the scanning mirror in the first direction to drive the scanning mirror, and generating, on a basis of output of the angle-of-view parameter, a second drive signal that has a linear waveform and rotationally driving the scanning mirror in the second direction to drive the scanning mirror through a low-pass filter.

13. The program according to claim 12, wherein the process of the generation of the shift correction amount and the scanning angle range correction amount includes referring to a reference table on a basis of the shift change amount to read and outputting the shift correction amount and the scanning angle range correction amount that correspond to the expected deviation amount in the first frame.

14. The program according to claim 12, wherein the process of the generation of the shift correction amount and the scanning angle range correction amount includes calculating and outputting the shift correction amount and the scanning angle range correction amount that correspond to the expected deviation amount in the first frame obtained from the shift change amount, the scanning angle range, and a cutoff frequency of the low-pass filter.

15. The program according to any one of claims 12 to 14, wherein
the second direction includes a vertical direction, and
the second drive signal that has the linear waveform includes a sawtooth wave, wherein
the process of the generation of the shift correction amount and the scanning angle range correction amount includes:
in a case where the expected deviation amount at a time when a measurement range moves downward along the vertical direction is d, the measurement range that has a width that corresponds to a distance in which the laser beam moves in the first direction from one end to another end of the scanning angle range at a position a certain distance away from the laser sensor and a height that corresponds to a distance in which the laser beam moves in the second direction from a lowest point to a highest point of the scanning angle range at the position the certain distance away from the laser sensor, offset the entire measurement range downward in a first frame immediately after the movement of the measurement range by d/2 and narrow a vertical height along the vertical direction by d to control the scanning angle range and the shift amount in such a manner that an angle of view becomes equivalent between the first frame immediately after the movement of the measurement range and a second and subsequent frames; and
in a case where the expected deviation amount at a time when the measurement range moves upward along the vertical direction is d, offset the entire measurement range upward in the first frame immediately after the movement of the measurement range by d/2 and widen the vertical height along the vertical direction by d to control the scanning angle range and the shift amount in such a manner that the angle of view becomes equivalent between the first frame immediately after the movement of the measurement range and the second and subsequent frames.

16. The program according to any one of claims 12 to 15, an arithmetic circuit of the laser sensor is configured to
extract target data of the measurement target in a case where the measurement target is present in the scanned scanning angle range,
calculate a distance to a position of a center of gravity of the measurement target from the extracted target data and calculates an azimuth angle to the position of the center of gravity of the measurement target from projection angle data that indicates a projection angle of the laser beam and the extracted target data; and
calculate each of setting values of the scanning angle range and the shift amount on a basis of the distance and the azimuth angle to the position of the center of gravity of the measurement target in such a manner that the measurement target is detected near a center of the scanning angle range.

17. A computer-readable storage medium storing the program according to any one of claims 12 to 16.
